# EUROPEAN PATENT SPECIFICATION

(11) **EP 2 637 411 B1**
(45) Date of publication and mention of the grant of the patent: **21.06.2017**
(21) Application number: 13150453.2
(22) Date of filing: 08.01.2013
(51) Int. Cl.: H04N 9/75, G09G 5/397

(54) **Image compositing apparatus**
Bildzusammenstellungsvorrichtung
Appareil de composition d'image

(30) Priority: 08.03.2012 JP 2012051291
(43) Date of publication of application: 11.09.2013
(73) Proprietor: Mitsubishi Electric Corporation, Chiyoda-ku Tokyo 100-8310 (JP)
(72) Inventor: Yamamoto, Masatsugu, Tokyo, 1008310 (JP)
(74) Representative: Pfenning, Meinig & Partner mbB

(56) References cited:
- JP-A- 2007 206 428
- US-A1- 2010 066 762

## Description

An image processing apparatus, in which an image plane of specific color has been prepared on an image that serves as a base (base image), performs image processing such as scaling up or down of a second image different from the base image, to thereby overlay the second image on the image plane using a chroma key.

In this case, the color of the image plane is set to a chroma key color for overlay. The second image is overlaid on the image plane for a pixel that matches the chroma key color, whereas the base image is displayed as it is on the base image for a pixel that does not match the chroma key color (for example, see Patent Document 1).

Another image display apparatus "processes the priorities of images to be overlaid" for overlay display when overlaying a plurality of images different from the base image on the base image for display (for example, see Patent Document 2).
[Patent Document 1] Japanese Patent Application Laid-Open No. 05-207368 (1993) (pp.3-5, FIG. 1)
[Patent Document 2] Japanese Patent Application Laid-Open No. 2004-355391 (pp.3-7, FIG. 1)

### [Disclosure of Invention]

### [Problems to be Solved by the Invention]

Unfortunately, the conventional image display apparatuses perform overlay based on the chroma key mode, and thus, need to prepare an image plane for overlay of specific color on a base image that is mainly managed by a user.

Overlay can be performed without using the chroma key mode. However, when the number of display images to be overlaid is an n-type, there are n! (the factorial of n) ways of combinations of their priority (i.e., overlay priority) control, resulting in the following problem: the size of hardware for priority control increases with an increasing number of images to be overlaid.
an overlay image is displayed for pixels in a portion of chromakey color and the base image is displayed per se for pixels in a portion of a color that does not match the chromakey color.

There is known another image compositing technique in such a system (hardware overlay system) that in a case of displaying a plurality of overlay images on a base image, overlay is performed in a display priority order determined in advance for a portion in which the plurality of overlay images are superimposed on each other (for example, Japanese Patent Application Laid-Open No. 2004-355391, pp 3 to 7, FIG. 1).

As a conventional image compositing apparatus obtained by combining the above-mentioned two techniques, there is an image compositing apparatus that overlays and displays a plurality of images in appropriate sizes at appropriate positions on a base image, where the base image is a PC desktop.

This image compositing apparatus creates a composite overlay image obtained by compositing a plurality of overlay images by a hardware overlay system, and thereafter, in a case of compositing the composite overlay image and a base image, composites those images by a chromakey overlay system.

The chromakey color is selected so as not to match the color of a mouse cursor of a PC, and thus, the mouse cursor does not disappear even if the mouse cursor is superimposed on a composite overlay image.

The portion in which a plurality of overlay images are superimposed on each other is composited by the hardware overlay system, which enables to display the plurality of overlay images superimposed in a desired priority order.

The image compositing apparatus obtained by combining the above-mentioned two techniques uses a chromakey overlay system for compositing an overlay image on a base image. For this reason, in a case where there is no signal of the base image, not only the base image cannot be displayed, but also all overlay images cannot be displayed.

If a base image and all overlay images are not displayed in an image compositing apparatus aimed for providing a user with the base image and overlay images as information, an intended function is lost completely. In this respect, a conventional image compositing apparatus has a significant risk in operation.

### SUMMARY OF THE INVENTION

Above mentioned problems are solved by the image composing apparatus according to claim 1. The dependent claims describe advantageous embodiments of the image compositing apparatus according to claim 1.

According to the present invention, even in a case where the base image presence or absence decision unit decides the absence of a base image signal, the image compositing apparatus outputs an overlay image signal having the position and size changed by the image position and size change unit. This enables to continuously output overlay images even in a case where there is no base image signal due to, for example, an equipment failure.

These and other objects, features, aspects, and advantages of the present invention will become more apparent from the following detailed description of the present invention when taken in conjunction with the accompanying drawings.

### BRIEF DESCRIPTION OF THE DRAWINGS

FIG. 1 shows a circuit configuration of an image compositing apparatus according to a preferred embodiment of the present invention;
FIGS. 2A, 2B, 2C, 2D, 2E, and 2F show examples of a base image and the like according to the preferred embodiment of the present invention;
FIG. 3 shows the configuration of a base image processing circuit according to the preferred embodiment of the present invention;
FIG. 4 shows the configuration of a first overlay image processing circuit according to the preferred embodiment of the present invention; and
FIG. 5 shows the configuration of a selector control circuit according to the preferred embodiment of the present invention.

### DESCRIPTION OF THE PREFERRED EMBODIMENT

### <Overall configuration>

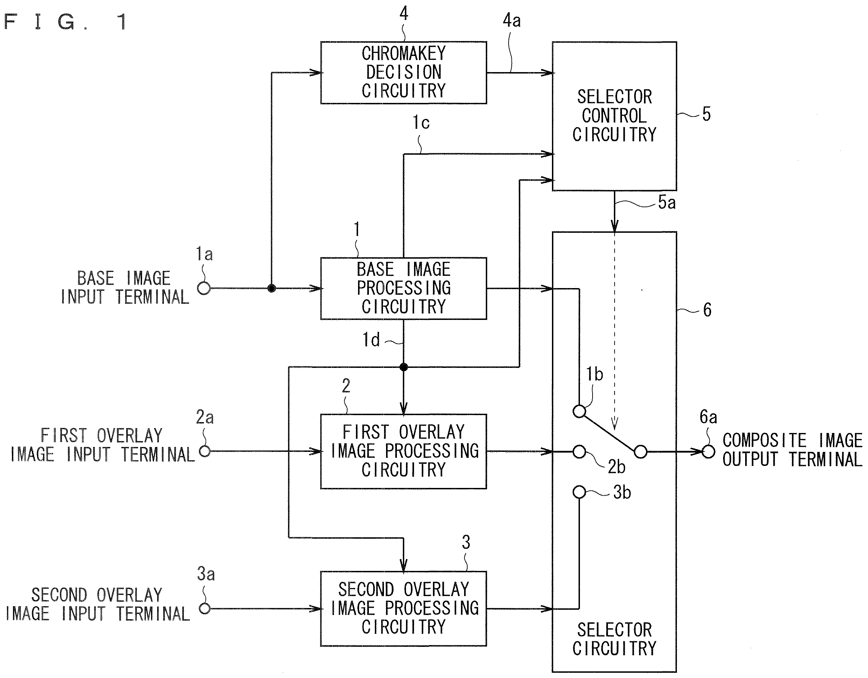

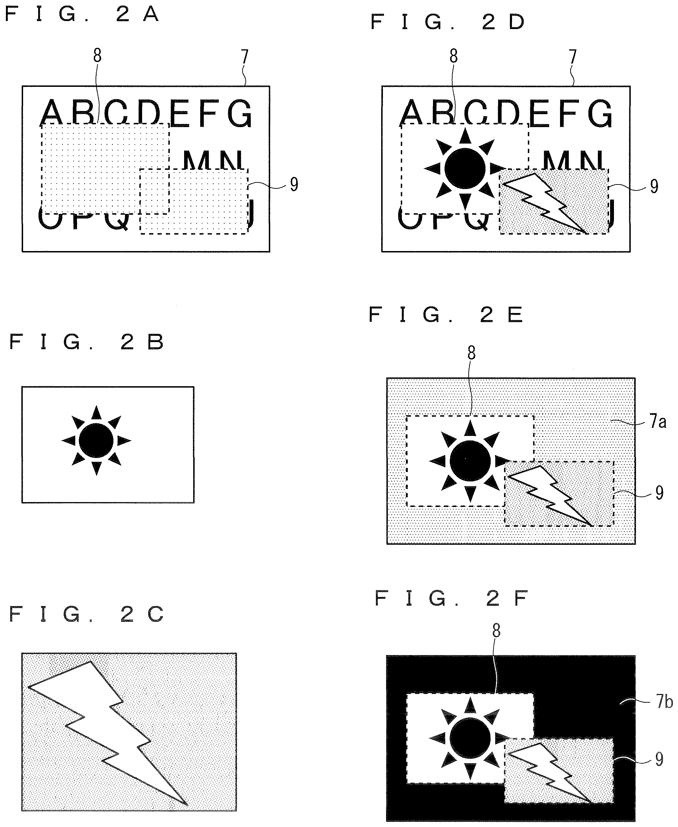

FIG. 1 shows the circuit configuration of an image compositing apparatus according to a preferred embodiment of the present invention. FIGS. 2A, 2B, 2C, 2D,

In this case, similarly to the base image processing circuit 9, the image processing circuits 1 to 8 each include a resize processor similar to that illustrated in FIG. 2 and are controlled so that the outputs of the base image processing circuit 9 and the image processing circuits 1 to 8 are synchronized with each other on a dot-clock-basis.

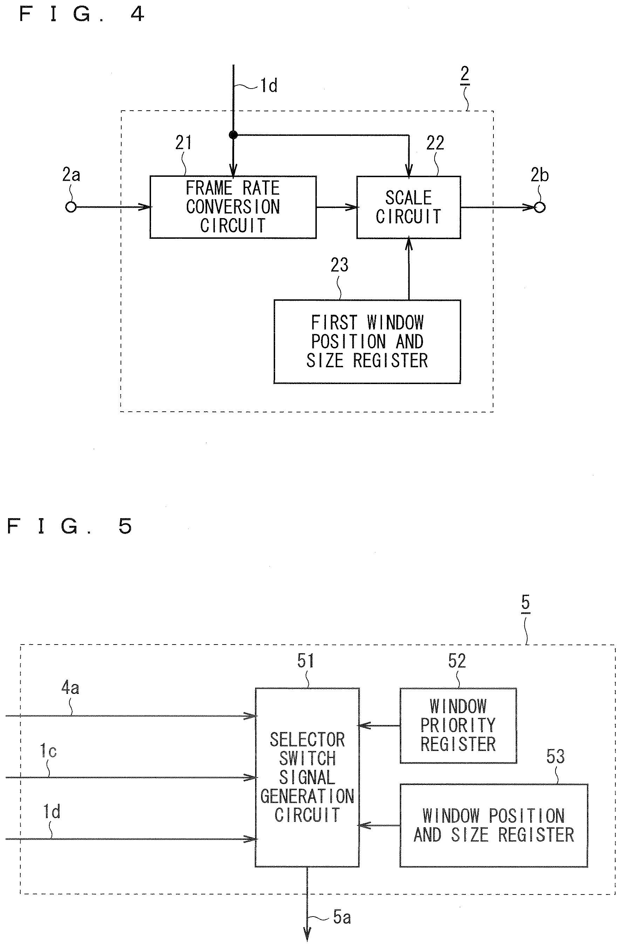

For example, when the image processing circuit 1 outputs an image for overlay in the size of a horizontal pixel width HW and the number of vertical lines VW, where the coordinates (x, y) of a rectangular area on the base image output from the base image processing circuit 9 are a starting point, as shown in the memory area 1 of FIG. 4, the resize processor 50 in the base image processing circuit 9 needs to generate an image plane for overlay corresponding to the image for overlay.

Herein, the resize processor 50 in the base image processing circuit 9, which has a function of filling in the rectangular area of the frame memory 51 with a fixed color, can fill in any rectangular area by specifying the coordinates (x, y) of the rectangular area, the horizontal pixel width HW, the number of vertical lines VW, and a filling color in the image area of the memory area 1 of FIG. 4.

Further, as shown in the memory area 2 of FIG. 4, image planes for overlay corresponding to the image processing circuits 1 to 8 can be generated by overwriting another rectangular area on the image area in which a rectangular area has been filled in once.

In this case, image planes for overlay reflecting the priorities of the image processing circuits 1 to 8 can be generated by filling in the rectangular areas with corresponding chroma key colors in the reverse order to the priorities of the images of the image processing circuits 1 to 8.

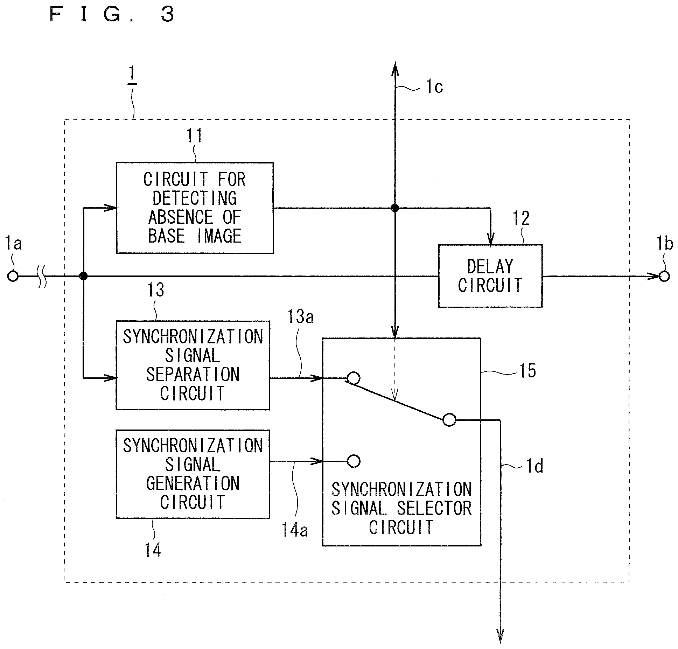

In actuality, during a blanking period before effective image data is read from the frame memory 51 as illustrated in FIG. 3, rectangular areas corresponding to image planes for overlay for the image processing circuits 1 to 4 are filled in with the chroma key color corresponding to the first chroma key determination circuit 11 and rectangular areas corresponding to the image planes for overlay for the image processing circuits 5 to 8 are filled in with the chroma key color corresponding to a second chroma key determination circuit 21, thus creating a plane area for overlay.

FIGs. 5A and 5B illustrate configuration examples of image plane for overlays.

For example, when the first chroma key color is set to blue and the second chroma key color is set to red, in the example of FIG. 5A, the rectangular areas corresponding to the image processing circuits 1 to 4 are filled in with blue (are outlined in FIG. 5), and the rectangular areas corresponding to the image processing circuits 5 to 8 are filled in with red (are diagonally shaded in FIGs. 5A and 5B). Then, these rectangular areas are inserted onto the base image.

In this case, filling-in of the rectangular area of the image data is controlled so that the rectangular areas corresponding to the effective areas corresponding to the image processing circuits 1 to 8 are filled in as the image planes for overlay in a reverse order to their priorities during the overlay of the image processing circuits 1 to 8.

In the case of FIG. 5A, the priorities of images to be entered into the image processing circuits 1 to 8 are "image 4 > image 8 > image 7 > image 3 > image 6 > image 2 > image 5 > image 1 ". The resize processor 50 thus performs control so as to fill in the corresponding rectangular areas in the frame memory 51 in the order of "image 1 (blue), image 5 (red), image 2 (blue), image 6 (red), image 3 (blue), image 7 (red), image 8 (red), and image 4 (blue)".

As illustrated in FIG. 5B, when the priorities are changed in the order of "image 8 > image 4 > image 7 > image 3 > image 6 > image 2 > image 5 > image 1", the resize processor 50 performs control so as to fill in the corresponding rectangular areas in the 1 frame memory 51 in the order of "image 1 (blue), image 5 (red), image 2 (blue), image 6 (red), image 3 (blue), image 7 (red), image 4 (blue), and image 8 (red)".

The image output, to which the image planes for overlay is added by the base image processing circuit 9, is entered into the first chroma key determination circuit 11.

The first chroma key determination circuit 11 detects only the color of the image planes for overlay (blue) for the image processing circuits 1 to 4, which have been inserted by the base image processing circuit 9, and outputs, to a first selector circuit 12, a KEYACT1 signal indicating an effective area of the image plane color and a signal delayed by the base image processing circuit 9.

For example, in the case of FIG. 5B, the first chroma key determination circuit 11 detects the plane color of the blue portions and determines the blue portions as the effective areas of the plane color.

In this case, the first chroma key determination circuit 11 outputs the KEYACT1 signal with respect to the line indicated by a dotted line in FIG. 5B as a signal indicating the effective area of the plane color (blue), as illustrated in FIG. 7.

The first chroma key determination circuit 11 outputs, to the first selector circuit 12, the KEYACT1 signal with the exact timing so that a base image entered from the base image processing circuit 9 and the KEYACT1 signal for the base image are synchronized with each other.

Herein, similarly to the base image processing circuit 9, each of the image processing circuits 1 to 8 is composed of the resize processor 50 and the frame memory 51 as illustrated in FIG. 2. Each image processing circuit performs frame rate conversion for synchronization with the synchronization signals output from the main control circuit 30 and, simultaneously, scales up or down each image for overlay and controls its display position, thus outputting a signal (HACT signal) indicating an effective area of the overlay image.

For example, when an XGA signal for overlay illustrated in FIG. 6A is entered into the image processing circuit 1, the resize processor 50 in the image processing circuit 1 performs a scale-down process to display an image for overlay at a position as illustrated in FIG. 6B, thereby outputting a HACT signal indicating an effective area of the image for overlay. The resize processor 50 simultaneously synchronizes the output timing with a horizontal signal of 64 KHz, a vertical signal of 60 Hz, and a dot clock of 108 MHz output from the main control circuit 30, thereby outputting a HACT signal.

With reference to FIG. 6B, however, the HACT signal is output during only the period of an effective area VACT in the vertical direction.

The image processing circuits 1 to 8 are controlled as described above, so that the outputs of the base image processing circuit 9 and the image processing circuits 1 to 8 are output in synchronization with the vertical synchronization signal, horizontal synchronization signal, and dot clock output from the main control circuit 30.

The first selector circuit 12 receives the images for overlay 1 to 4 output from the image processing circuits 1 to 4 and HACT1 to HACT4 signals indicating the respective effective areas thereof.

The first selector circuit 12 performs overlay priority control on the effective area signals of the outputs (images for overlay) of the image processing circuits 1 to 4 in response to the control signals output from the main control circuit 30. The first selector circuit 12 simultaneously performs control so that the images for overlay 1 to 4 subjected to the priority control are selected in the effective area of the image plane portion (a KEYACT1 signal of FIG. 7) for the images for overlay 1 to 4 output from the first chroma key determination circuit 11 and that a base image is selected in the other area.

For example, when overlay is performed in accordance with the priorities as illustrated in FIG. 5B, the image processing circuits 1 to 4 respectively output HACT1 to HACT4 with the timings as illustrated in FIG. 7.

Herein, FIG. 7 is a diagram for explaining the operation of the first selector circuit 12 at the line indicated by the dotted line of FIG. 5B.

In this case, the main control circuit 30 performs control so that the outputs of the image processing circuits 1 to 4 are overlaid in accordance with the priorities of "image 4 > image 3 > image 2 > image 1".

The first selector circuit 12 generates internal control signals as indicated by ACT1 to ACT4 in FIG. 7 in accordance with the overlay priority.

The first selector circuit 12 also receives the result of the determination (KEYACT1 signal) by the first chroma key determination circuit 11, and selects the outputs of the image processing circuits 1 to 4 only in the case of KEYACT1 = "H" or selects a base image output from the first chroma key determination circuit 11 in the case of KEYACT1 = "L".

That is to say, the first selector circuit 12 overlays, in accordance with the ACT1 to ACT4 and the result of the determination by the first chroma key determination circuit 11, the images for overlay 1 to 4 on only the key color portions of the blue portions of the base image illustrated in FIG. 5B.

In this case, the first selector circuit 12 selects the output of the image processing circuit 1 when ACT1 and KEYACT1 are "H", selects the output of the image processing circuit 2 when ACT2 and KEYACT1 are "H", selects the output of the image processing circuit 3 when ACT3 and KEYACT1 are "H", selects the output of the image processing circuit 4 when ACT4 and KEYACT1 are "H", and selects the output of the first chroma key determination circuit 11 when KEYACT1 is "L" and when ACT1 to ACT4 are all "L".

Then, the second chroma key determination circuit 21 receives an image signal obtained by overlaying the images output from the image processing circuits 1 to 4 on the base image output from the first chroma key determination circuit 11.

Herein, the second chroma key determination circuit 21 detects only the chroma key color corresponding to the image planes for the image processing circuits 5 to 8 inserted by the base image processing circuit 9 and outputs, to the second selector circuit 22, the information indicating the effective area of an image plane color and a base image in which the pieces of image data output from the image processing circuits 1 to 4 are overlaid.

That is to say, the second chroma key determination circuit 21 detects an image plane color of red portions (which are diagonally shaded in FIGs. 5A and 5B) of FIGs. 5Aand 5B and determines the red portions as the effective areas of the image plane color.

The second selector circuit 22 receives the images for overlay 5 to 8 respectively output from the image processing circuits 5 to 8 and HACT signals indicating the respective effective areas thereof.

Similarly to the first selector circuit 12, the second selector circuit 22 performs overlay priority control on the effective area signals of the images for overlay 5 to 8 in response to control signals output from the main control circuit 30. The second selector circuit 22 simultaneously performs control such that the images for overlay 5 to 8 are selected in the effective area of the image planes for the images for overlay 5 to 8 output from the second chroma key determination circuit 22 and that a base image (image with overlaid images for overlay 1 to 4 on a base image) output from the second chroma key determination circuit 22 is selected in the other area.

With the configuration above, the image display apparatus of the present invention generates planes for overlay on a base image, without a user preparing planes for chroma key on a base image in advance.

In the first embodiment, the image display apparatus inserts 2-line image plane colors for overlay onto a base image and performs overlay using a chroma key in twice, so that 8-line images for overlay can be overlaid at any position on a base image in accordance with the overlay priorities.

That is to say, chroma key planes of two colors are prepared, and the first selector circuit 12 and the second selector circuit 22 control the overlay priority of 8-line overlay images.

Image planes can be easily inserted onto a base image by filling in 8-line planes for overlay in a reverse order to the overlay priorities.

For normally performed control of the overlay priority of 8-line overlays, there are 8! = 40320 ways of combinations. Through division into 4-line overlays, the 8-line overlays are enabled under the control of 4! × 2 = 48 ways.

### Second Embodiment

In the first embodiment described above, image planes for overlay are inserted into an image for base entered in the image display apparatus. Alternatively, even when an image for base (base image) is not externally entered, the resize processor 50 of the base image processing circuit 9 of FIG. 1 may generate a base image that is synchronized with a vertical synchronization signal, a horizontal synchronization signal, and a dot clock output from the main control circuit 30.

In this case, planes for overlay are prepared in chroma key colors, which correspond to the first chroma key determination circuit 11 and the second chroma key determination circuit 21, on a base image generated inside the resize processor 50 and are output to the first chroma key determination circuit 11 as a base image.

In a second embodiment, the base image processing circuit 9 does not receive a base image in FIG. 1, and thus, the resize processor 50 in the base image processing circuit 9 performs control so as to read only a fixed area of the frame memory 51.

That is to say, in the case in which the frame memory 51 is divided into the memory areas as illustrated in FIG. 4, the resize processor 50 uses the memory area 1 and the memory area 2 to generate an image plane for overlay as a base image and outputs the image plane for overlay in synchronization with the vertical synchronization signal, horizontal synchronization signal, and dot clock output from the main control circuit 30.

The resize processor 50 is controlled to prepare image planes for overlay in one memory area in accordance with a control signal output from the main control circuit 30 and read the prepared memory area per frame.

Meanwhile, the resize processor 50 performs control so as to write, upon change of the positions, sizes, and priorities of the image planes for overlay image output from the image processing circuits 1 to 8, an image plane for overlay into a memory area being not currently read and switch a memory area to be read in the next frame.

In this case, the resize processor 50 performs control so as to write the planes corresponding to the sizes of the overlay images output from the image processing circuits 1 to 8 and the positions thereof in a reverse order to their priorities, as in the first embodiment.

For example, in the case in which the output of the image display apparatus is an SXGA output of an effective image of 1280 × 1024 pixels, the resize processor 50 in the base image processing circuit 9 provides such an output so that the output is synchronized with a horizontal synchronization signal of 64 KHz, a vertical synchronization signal of 60 Hz, and a dot clock of 108 MHz output from the main control circuit 30.

In the example illustrated in FIG. 8, overlay display is performed in accordance with the priorities of "image 4 > image 8 > image 7 > image 3 > image 6 > image 2 > image 5 > image 1" (the output of the image processing circuit 1 is shown in the size of 1280 × 1024 pixels, and the images 2 to 8 are scaled down and displayed while being overlaid).

In actuality, memory areas are switched as illustrated in FIG. 9.

That is to say, with the illustrated frames 1 and 2, the resize processor 50 reads the data (M11 in FIG. 9) stored in the memory area 1 illustrated in FIG. 4 and outputs it to the first chroma key determination circuit 11 as an output effective image.

Then, with the illustrated frame 2, when the main control circuit 30 provides an instruction to change the positions, sizes, and priorities of the image planes for overlay image output from the image processing circuits 1 to 8, the resize processor 50 prepares an image plane for overlay (M22 in FIG. 9) in the memory area 2.

For example, when the overlay as illustrated in FIG. 8 is to be performed, the resize processor 50 performs control so that a corresponding rectangular area is filled in in the area of M22 in the order of "image 1 (blue), image5 (red), image 2 (blue), image 6 (red), image 3 (blue), image 7 (red), image 8 (red), and image 4 (blue)".

Further, with the frame 3 of FIG. 9, the resize processor 50 changes the area to be read from the frame memory 51 from the memory area 1 to the memory area 2 in synchronization with a vertical synchronization signal output from the main control circuit 30, and outputs the data on the image plane for overlay prepared in the memory area 2 as an output effective image to the first chroma key determination circuit 11.

Herein, the operations of the image processing circuits 1 to 8, the first chroma key determination circuit 11, the second chroma key determination circuit 21, the first selector circuit 12, and the second selector circuit 22 are similar to those of the first embodiment, and accordingly, the description thereof will be omitted.

As described above, in the present embodiment, two memory areas are prepared in the frame memory 51, and control is performed so that an image plane for overlay is prepared in a memory area being not currently read and is switched every time the positions, sizes, priorities, or the like of the like of the planes for overlay images output from the image processing circuits 1 to 8 are changed. There is accordingly no need to update an image plane for overlay per frame.

If the base image has no signal, the resize processor 50 outputs a base image including an image plane for overlay. There is accordingly no need to externally prepare a base image.

When overlay of eight-line image data is performed in twice, if no image plane for overlay is provided on the base image, the priorities cannot be set between the first overlay and the second overlay. However, the second embodiment can set the overlay priorities of overlay images through any combination even when the pieces of image data are overlaid in twice.
numerous modifications and variations can be devised without departing from the scope of the invention.

## Claims

1. An image compositing apparatus that superimposes an overlay image signal on an area of chromakey color (8, 9) on a base image signal (7) and outputs a composite image signal to be displayed as a composite image, the image compositing apparatus comprising:
a storage unit that stores the position and size of an area (8, 9) in which said overlay image signal is displayed in the composite image;
an image position and size change unit that changes the position and size of said overlay image signal in accordance with the information of said storage unit;
a base image presence or absence decision unit (11) that decides the presence or absence of said base image signal (7); and
a chromakey decision unit (4) that decides a chromakey color portion of said base image signal (7), wherein
in a case where said base image presence or absence decision unit (11) decides the presence of the base image signal (7) and said chromakey decision unit (4) decides that the portion of the base image signal (7) is the chromakey color portion, the image compositing apparatus outputs a corresponding portion of said overlay image signal having the position and size changed by said image position and size change unit as the composite image signal,
in a case where said base image presence or absence decision unit (11) decides the presence of the base image signal (7) and said chromakey decision unit (4) decides that the portion of the base image signal is not the chromakey color portion, said image compositing apparatus outputs the portion of the base image signal (7) as the composite image signal, and
in a case where said base image presence or absence decision unit decides the absence of the base image signal (7), said image compositing apparatus outputs said overlay image signal having the position and size changed by said image position and size change unit as the composite image signal.

2. The image compositing apparatus according to claim 1, wherein in the case where said base image presence or absence decision unit (11) decides the absence of a base image signal (7), said image compositing apparatus outputs said overlay image signal with the use of a video synchronization signal prepared in advance in place of a video synchronization signal obtained from the base image signal.

3. The image compositing apparatus according to claim 1 or 2, wherein in the case where said base image presence or absence decision unit (11) decides the absence of a base image signal (7), said image compositing apparatus outputs a pre-stored image signal in place of said base image signal.

## Patentansprüche

1. Bildzusammensetzungsgerät, das ein Überlagerungsbildsignal auf einen Bereich von Chromakeyfarbe (8, 9) auf einem Basisbildsignal (7) überlagert und ein zusammengesetztes Bildsignal ausgibt, das als zusammengesetztes Bild anzuzeigen ist, wobei das Bildzusammensetzungsgerät aufweist:
eine Speichereinheit, die die Position und Größe eines Bereichs (8, 9), in welchem besagtes Überlagerungsbildsignal in dem zusammengesetzten Bild angezeigt wird, speichert;
eine Bildpositions- und -größenänderungseinheit, die die Position und Größe des besagten Überlagerungsbildsignals entsprechend der Information von besagter Speichereinheit verändert;
eine Basisbildanwesenheits- oder -abwesenheitsentscheidungseinheit (11), die die Anwesenheit oder Abwesenheit des besagten Basisbildsignals (7) entscheidet; und
eine Chromakey-Entscheidungseinheit (4), die einen Chromakey-Farbenbereich des besagten Basisbildsignals (7) entscheidet, wobei
in einem Fall, wo die Basisbildanwesenheits- oder -abwesenheitentscheidungseinheit (11) die Anwesenheit des Basisbildsignals (7) entscheidet und besagte Chromakey-Entscheidungseinheit (4) entscheidet, dass der Bereich des Basisbildsignals (7) der Chromakey-Farbbereich ist, das Bildzusammensetzungsgerät einen korrespondierenden Bereich des besagten Überlagerungsbildsignals ausgibt, der die Position und Größe, die durch besagte Bildpositions- und Größenänderungseinheit geändert wurde, hat, als zusammengesetztes Bildsignal ausgibt,
in einem Fall, wo die Basisbildanwesenheits- oder-abwesenheitentscheidungseinheit (11) die Gegenwart des Basisbildsignals (7) entscheidet und die besagte Chromakey-Entscheidungseinheit (4) entscheidet, dass der Bereich des Basisbildsignals nicht der Chromakeyfarbbereich ist, besagtes Bildzusammensetzungsgerät den Bereich des Basisbildsignals (7) als das zusammengesetzte Bildsignal ausgibt, und
in einem Fall, wo die besagten Basisbildanwesenheits- oder -abwesenheitentscheidungseinheit die Abwesenheit des Basisbildsignals (7) entscheidet, besagtes Bildzusammensetzungsgerät besagtes Überlagerungsbildsignal ausgibt, das die Position und Größe durch besagte Bildpositions- und Größenänderungseinheit geändert hat, als das zusammengesetzte Bildsignal ausgibt.

2. Bildzusammensetzungsgerät nach Anspruch 1, wobei in dem Fall, wo die Basisbildanwesenheits- oder Abwesenheitentscheidungseinheit (11) die Abwesenheit eines Basisbildsignals (7) entscheidet, das Bildzusammensetzungsgerät das besagte Überlagerungsbildsignal mit der Verwendung eines Videosynchronisationssignals, das im Voraus anstelle eines Bildsynchronisationssignals, das von dem Basisbildsignal erhalten wurde, ausgibt.

3. Bildzusammensetzungsgerät nach einem der Ansprüche 1 oder 2, wobei in dem Fall, wo die Basisbildanwesenheits- oder -abwesenheitentscheidungseinheit (11) die Abwesenheit eines Basisbildsignals (7) entscheidet, das besagte Bildzusammensetzungsgerät ein vorgespeichertes Bildsignal anstelle des Basisbildsignals ausgibt.

## Revendications

1. Appareil de composition d'images qui superpose un signal d'image de superposition sur une zone de couleur d'incrustation (8, 9) sur un signal d'image de base (7) et produit en sortie un signal d'image composite devant être affiché sous la forme d'une image composite, l'appareil de composition d'images comprenant :
une unité de stockage qui stocke la position et la taille d'une zone (8, 9) dans laquelle ledit signal d'image de superposition est affiché dans l'image composite ;
une unité de changement de position et de taille d'image qui change la position et la taille dudit signal d'image de superposition selon les informations de ladite unité de stockage ;
une unité de décision de présence ou d'absence d'image de base (11) qui décide de la présence ou de l'absence dudit signal d'image de base (7) ; et
une unité de décision d'incrustation de couleur (4) qui décide d'une partie de la couleur d'incrustation dudit signal d'image de base (7), dans lequel
dans un cas où ladite unité de décision de présence ou d'absence d'image de base (11) décide de la présence du signal d'image de base (7) et ladite unité de décision d'incrustation de couleur (4) décide que la partie du signal d'image de base (7) est la partie de couleur d'incrustation, l'appareil de composition d'images produit en sortie une partie correspondante dudit signal d'image de superposition dont la position et la taille sont modifiées par ladite unité de changement de position et de taille d'image en tant que signal d'image composite,
dans un cas où ladite unité de décision de présence ou d'absence d'image de base (11) décide de la présence du signal d'image de base (7) et ladite unité de décision d'incrustation de couleur (4) décide que la partie du signal d'image de base n'est pas la partie de couleur d'incrustation, ledit appareil de composition d'images produit en sortie la partie du signal d'image de base (7) en tant que signal d'image composite, et
dans un cas où ladite unité de décision de présence ou d'absence d'image de base décide de l'absence du signal d'image de base (7), ledit appareil de composition d'images produit en sortie ledit signal d'image de superposition dont la position et la taille sont modifiées par ladite unité de changement de position et de taille d'image en tant que signal d'image composite.

2. Appareil de composition d'images selon la revendication 1, dans lequel, dans le cas où ladite unité de décision de présence ou d'absence d'image de base (11) décide de l'absence d'un signal d'image de base (7), ledit appareil de composition d'images produit en sortie ledit signal d'image de superposition en utilisant un signal de synchronisation vidéo préparé à l'avance à la place d'un signal de synchronisation vidéo obtenu à partir du signal d'image de base.

3. Appareil de composition d'images selon la revendication 1 ou 2, dans lequel, dans le cas où ladite unité de décision de présence ou d'absence d'image de base (11) décide de l'absence d'un signal d'image de base (7), ledit appareil de composition d'images produit en sortie un signal d'image préstocké dudit signal d'image de base.
